Europäisches Patentamt

European Patent Office

Office européen des brevets

(19)

(11) **EP 0 956 605 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(21) Anmeldenummer: **98905217.0**

(22) Anmeldetag: **07.01.1998**

(51) Int Cl.$^7$: **H01M 8/04**, B60L 11/18

(86) Internationale Anmeldenummer:
**PCT/DE98/00037**

(87) Internationale Veröffentlichungsnummer:
**WO 98/32185 (23.07.1998 Gazette 1998/29)**

(54) **VERFAHREN ZUM BETREIBEN EINER PEM-BRENNSTOFFZELLENANLAGE UND PEM-BRENNSTOFFZELLENANLAGE**

METHOD FOR OPERATING A PEM FUEL CELL INSTALLATION AND PEM FUEL CELL INSTALLATION

UNITE A PILES A COMBUSTIBLE A MEMBRANE ELECTROLYTIQUE POLYMERE ET SON PROCEDE DE FONCTIONNEMENT

(84) Benannte Vertragsstaaten:
**DE FR GB IT NL SE**

(30) Priorität: **16.01.1997 DE 19701390**

(43) Veröffentlichungstag der Anmeldung:
**17.11.1999 Patentblatt 1999/46**

(73) Patentinhaber: **SIEMENS AKTIENGESELLSCHAFT**
**80333 München (DE)**

(72) Erfinder:
• **STÜHLER, Walter**
**D-96114 Hirschaid (DE)**

• **STENGER, Herbert**
**D-90559 Burgthann (DE)**
• **KEIM, Martin**
**D-91096 Möhrendorf (DE)**

(56) Entgegenhaltungen:
**EP-A- 0 633 157        DE-C- 19 640 808**
**US-A- 5 645 950**

• **SWAN D H ET AL: "FUEL CELL DYNAMICS IN TRANSIT APPLICATIONS" INTERNATIONAL ELECTRIC VEHICLE SYMPOSIUM, ANAHEIM, DEC. 5 - 7, 1994, Bd. VOL. 1, Nr. SYMP. 12, 5.Dezember 1994, ELECTRIC VEHICLE ASSOCIATION OF THE AMERICAS (EVAA), Seiten 73-80, XP000488472**

**Beschreibung**

Die Erfindung bezieht sich auf ein Verfahren zum Betreiben einer PEM-Brennstoffzellenanlage und eine PEM-Brennstoffzellenanlage.

Brennstoffzellen ermöglichen die direkte Erzeugung elektrischer Energie aus Wasserstoff ($H_2$) und Sauerstoff ($O_2$) mit erheblich besserem Wirkungsgrad und deutlich geringeren Schadstoffemissionen als herkömmliche Energieerzeuger. Außerdem arbeiten sie fast geräuschlos.

Neben diesen grundsätzlichen Vorteilen hat die Brennstoffzelle mit einem festen Elektrolyten aus Kunststoff (Polymere Elektrolyt Membran-PEM) weitere positive Merkmale, wie eine niedrige Betriebstemperatur von weniger als 80°C, günstiges Überlastverhalten, geringe Spannungsdegradation, hohe Lebensdauer, günstiges Last- und Temperaturzyklusverhalten sowie Fehlen eines flüssigen korrosiven Elektrolyten. Zudem ist sie auch für einen Betrieb mit Luft aus der Umgebung anstatt mit Sauerstoff ($O_2$) verwendbar.

Alle diese Eigenschaften machen die mit Luft betreibbare PEM-Brennstoffzelle zu einem nahezu idealen Stromerzeuger z.B. für den abgasfreien elektrischen Betrieb eines Kraftfahrzeugs.

PEM-Brennstoffzellen sind für sich allein nicht betreibbar. Daher werden ein PEM-Brennstoffzellenblock, der eine Vielzahl von PEM-Brennstoffzellen umfaßt, ein Betriebsteil und eine zugeordnete Modulelektronik zu einem PEM-Brennstoffzellen-Modul zusammengefaßt. Im Betriebsteil sind die Einrichtungen für die Versorgung mit Wasserstoff ($H_2$) und Luft, für die Produktwasserabfuhr, für die Verlustwärmeabfuhr, für die Befeuchtung der Reaktanden und für die Separation der Gasverunreinigungen zusammengefaßt.

Wichtige Kenngrößen, die den Betrieb einer PEM-Brennstoffzellenanlage (mit wenigstens einem PEM-Brennstoffzellen-Modul) mit Luft charakterisieren, sind das Luftverhältnis $\lambda$ und der Luftvolumenstrom $V_L$. Der Luftvolumenstrom $V_L$ ist ein Maß für die den PEM-Brennstoffzellenblock pro Zeiteinheit durchströmende Menge an Luft. Das Luftverhältnis $\lambda$ gibt den Bedarf an Luft bei der Reaktion an, wenn anstelle von reinem Sauerstoff ($O_2$) Luft aus der Umgebung verwendet wird.

Beim Betrieb der PEM-Brennstoffzellenanlage erweist sich die Steuerung oder Regelung des Luftvolumenstromes $V_L$ als aufwendig. Beispielsweise aus der Deutschen Offenlegungsschrift 43 18 818 ist eine Luftversorgungseinrichtung für eine luftbetriebene Brennstoffzellenanlage mit einem Verdichter bekannt. Zum Einstellen des Verdichters wird der Luftvolumenstromes $V_L$ mit einem Durchflußmeßgerät und der elektrische Strom I eines PEM-Brennstoffzellenblockes mit einem Stromistwertsensor kontinuierlich erfaßt. Sowohl der Luftvolumenstrom $V_L$ als auch der elektrische Strom I des PEM-Brennstoffzellenblockes werden kontinuierlich einer Regeleinrichtung zugeführt. Zum Einstellen des Verdichters und damit der PEM-Brennstoffzellenblockes werden somit mehrere Meßgrößen kontinuierlich erfaßt und verarbeitet.

Der Erfindung liegt die Aufgabe zugrunde, ein Verfahren zum Betreiben einer PEM-Brennstoffzellenanlage mit einem PEM-Brennstoffzellenblock anzugeben, welches ein einfaches Einstellen des Luftvolumenstromes $V_L$ für den PEM-Brennstoffzellenblock mit einem geringen apparativen Aufwand gewährleistet und somit kostengünstiger als die aus dem Stand der Technik bekannten Verfahren ist. Außerdem soll eine PEM-Brennstoffzellenanlage zum Durchführen des Verfahrens angegeben werden.

Die erstgenannte Aufgabe wird gemäß der Erfindung gelöst durch ein Verfahren zum Betreiben einer PEM-Brennstoffzellenanlage, die wenigstens einen PEM-Brennstoffzellenblock enthält, dem ein drehzahlgesteuerter Verdichter zum Zuführen des Luftvolumenstromes $V_L$ vorgeschaltet ist, wobei zum Einstellen des elektrischen Stromes I des PEM-Brennstoffzellenblocks auf einen vorgegebenen Wert $I_{SN}$ die Drehzahl n des Verdichters auf einen Sollwert $n_{SN}$ gesteuert wird, wobei der Sollwert $n_{SN}$ aus dem vorgegebenen Wert $I_{SN}$ des elektrischen Stromes I abgeleitet wird.

Die zweitgenannte Aufgabe wird gemäß der Erfindung gelöst durch eine PEM-Brennstoffzellenanlage, die wenigstens einen PEM-Brennstoffzellenblock enthält, dem ein drehzahlgesteuerter Verdichter zum Zuführen des Luftvolumenstromes $V_L$ vorgeschaltet ist, wobei eine Steuereinheit zum Einstellen des elektrischen Stromes I des PEM-Brennstoffzellenblocks auf einen vorgegebenen Wert $I_{SN}$ vorgesehen ist, welche die Drehzahl n des Verdichters auf einen Sollwert $n_{SN}$ steuert, wobei der Sollwert $n_{SN}$ aus dem vorgegebenen Wert $I_{SN}$ des elektrischen Stromes I abgeleitet wird.

Durch dieses Verfahren wird eine einfache Steuerung der Drehzahl n des drehzahlgesteuerten Verdichters und damit des Luftvolumenstromes $V_L$ für den PEM-Brennstoffzellenblock mit einem geringen apparativen Aufwand gewährleistet. Bei dieser Steuerung werden der Luftvolumenstromes $V_L$ durch den PEM-Brennstoffzellenblock und der elektrische Strom I des PEM-Brennstoffzellenblockes nicht gemessen.

Aus einer vorgegebenen Kennlinie für das vorgegebene Luftverhältnis $\lambda$ wird für einen vorgegebenen Wert $I_{SN}$ des elektrischen Stromes I des PEM-Brennstoffzellenblocks der entsprechende Sollwert $n_{SN}$ der Drehzahl n für den drehzahlgesteuerten Verdichter ermittelt. Der Sollwert $n_{SN}$ wird dann auf den drehzahlgesteuerten Verdichter geschaltet. Eine Regelung für den drehzahlgesteuerten Verdichter wird somit nicht benötigt. Das Verfahren ist damit kostengünstiger als die aus dem Stand der Technik bekannten Verfahren. Außerdem weist dieses Verfahren damit eine hohe Dynamik bei Lastwechseln auf.

Vorzugsweise wird der Sollwertes $n_{SN}$ der Drehzahl n für den drehzahlgesteuerten Verdichter von einer Steuereinheit vorgegeben.

Insbesondere kann der vorgegebene Wert $I_{SN}$ des elektrischen Stromes I für einen Verbraucher von der Steuereinheit vorgegeben sein.

Vorzugsweise wird ein dem PEM-Brennstoffzellenblock nachgeschaltetes Ventil so eingestellt, daß sich bei maximaler Drehzahl $n_M$ des Verdichters ein Luftvolumenstrom $V_L$ ergibt, der dem vorgegebenen Luftverhältnis λ entspricht. Durch diese Maßnahmen werden optimierte Betriebsbedingung für die PEM-Brennstoffzellenanlage geschaffen, wie beispielsweise ein geeigneter Betriebsdruck der Betriebsmittel im PEM-Brennstoffzellenblock oder die Konstanthaltung des Luftverhältnisses λ bei sich änderndem elektrischen Strom I des PEM-Brennstoffzellenblocks durch Steuerung der Drehzahl n des Verdichters.

Weitere vorteilhafte Ausgestaltungen sind in den Unteransprüchen beschrieben.

Zur weiteren Erläuterung der Erfindung wird auf die Ausführungsbeispiele der Zeichnung verwiesen. Es zeigen:

FIG 1 eine PEM-Brennstoffzellenanlage gemäß der Erfindung in schematischer Darstellung und

FIG 2 ein Diagramm, in dem für ein vorgegebenes Luftverhältnis λ der Luftvolumenstrom $V_L$ durch einen PEM-Brennstoffzellenblock gegen den im PEM-Brennstoffzellenblock erzeugten elektrischen Strom I aufgetragen ist.

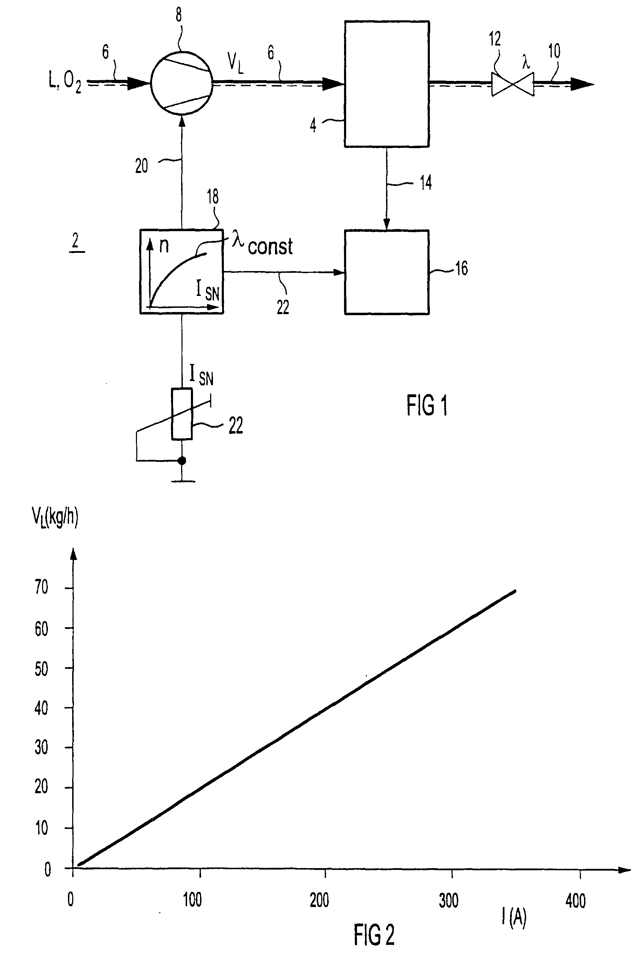

Gemäß FIG 1 umfaßt eine PEM-Brennstoffzellenanlage 2 einen sich aus einer Vielzahl von PEM-Brennstoffzellen zusammensetzenden PEM-Brennstoffzellenblock 4. Die PEM-Brennstoffzellenanlage 2 ist beispielsweise Teil eines elektrisch betriebenen Kraftfahrzeuges, beispielsweise eines Personenkraftwagens, eines Busses oder eines Gabelstaplers.

Zum Betreiben der PEM-Brennstoffzellenanlage 2 werden als Betriebsmittel Wasserstoff ($H_2$) und Luft L aus der Umgebung verwendet.

Über einen Zuweg 6 wird die Luft L in den PEM-Brennstoffzellenblock 4 für die elektrochemische Reaktion innerhalb des PEM-Brennstoffzellenblocks 4 eingespeist. In dem Zuweg 6 ist ein über die Drehzahl einstellbarer Verdichter 8 dem PEM-Brennstoffzellenblock 4 vorgeschaltet, um den Luftvolumenstrom $V_L$ dem PEM-Brennstoffzellenblock 4 zuzuführen.

Über einen Abweg 10 wird die in dem PEM-Brennstoffzellenblock 4 bei der elektrochemischen Reaktion nicht verbrauchte Luft aus demselben abgeführt. In dem Abweg 10 ist ein Ventil 12 angeordnet. Dieses dem PEM-Brennstoffzellenblock 4 in dem Abweg 10 nachgeschaltete Ventil 12 wird so eingestellt, daß sich bei maximaler Drehzahl $n_M$ des drehzahlgesteuerten Verdichters 8 ein Luftvolumenstrom $V_L$ durch den PEM-Brennstoffzellenblock 4 ergibt, der einem vorgegebenen Luftverhältnis λ, beispielsweise λ gleich 2, entspricht. Durch Einstellen des Ventils 12 wird somit der Wert für das Luftverhältnis λ für den Betrieb der PEM-Brennstoffzellenanlage 2 festgelegt.

Der in dem PEM-Brennstoffzellenblock 4 bei der elektrochemischen Reaktion erzeugte elektrische Strom I wird über eine elektrische Leitung 14 in einen Verbraucher 16 eingespeist. Bei dem Verbraucher 16 handelt es sich beispielsweise um den elektrischen Motor eines elektrisch angetriebenen Kraftfahrzeuges.

Ein Wert $I_{SN}$ des elektrischen Stromes I des PEM-Brennstoffzellenblocks 4 wird mit einer Steuereinheit 18,22 vorgegeben. Die Steuereinheit 18 umfaßt dabei das Gaspedal 22 eines elektrisch angetriebenen Kraftfahrzeuges. Die unterschiedlichen Stellungen des Gaspedals 22 entsprechen verschiedenen Werten $I_{SN}$ des elektrischen Stromes I des PEM-Brennstoffzellenblocks 4.

Bei dem vorliegenden Verfahren zum Einstellen des elektrischen Stromes I des PEM-Brennstoffzellenblocks 4 auf den vorgegebenen Wert $I_{SN}$ wird die Drehzahl n des Verdichters 8 auf einen Sollwert $n_{SN}$ gesteuert, wobei der Sollwert $n_{SN}$ aus dem vorgegebenen Wert $I_{SN}$ des elektrischen Stromes I abgeleitet wird. Dazu wird der über die Drehzahl n einstellbare Verdichter 8 über die Leitung 20 mit dem Sollwert $n_{SN}$ der Drehzahl n aus der Steuereinheit 18,22 beaufschlagt.

Für dieses Verfahren ist somit eine Regelung des drehzahlgesteuerten Verdichters 8 und damit des Luftvolumenstromes $V_L$ nicht erforderlich. Zudem entfallen dabei ein Durchflußmeßgerät zum Messen des Luftvolumenstromes $V_L$ und ein Stromistwertsensor zum Erfassen des elektrischen Stromes I des PEM-Brennstoffzellenblockes 4. Somit wird der apparative Aufbau für diese Steuerung entscheidend im Vergleich zu den aus dem Stand der Technik bekannten PEM-Brennstoffzellenanlagen vereinfacht. Außerdem ist dadurch eine hohe Dynamik bei Lastwechseln gewährleistet.

Bei diesem Verfahren wird der Sollwert $n_{SN}$ in Abhängigkeit von dem vorgegebenen Luftverhältnis λ aus dem vorgegebenen Wert $I_{SN}$ abgeleitet. Dazu ist in der Steuereinheit 18 eine Kennlinie für den funktionalen Zusammenhang zwischen dem elektrischen Strom I des PEM-Brennstoffzellenblocks 4 und der Drehzahl n des drehzahlgesteuerten Verdichters 8 für das vorgegebene Luftverhältnis λ, vorzugsweise λ gleich 2, hinterlegt. Mit Hilfe dieser Kennlinie wird somit unmittelbar der zu dem vorgegebenen Wert $I_{SN}$ des elektrischen Stromes I entsprechende Sollwert $n_{SN}$ der Drehzahl n für den drehzahlgesteuerten Verdichter 8 bestimmt. Der mit dem Sollwert $n_{SN}$ angesteuerte Verdichter 8 versorgt nun den PEM-Brennstoffzellenblock 4 mit dem zur Erzeugung des vorgegebenen Wertes $I_{SN}$ des elektrischen Stromes I erforderlichen Luftvolumenstrom $V_L$.

Im Diagramm in FIG 2 ist der Luftvolumenstrom $V_L$ des PEM-Brennstoffzellenblocks 4 gegen den im PEM-Brennstoffzellenblock 4 erzeugten elektrischen Strom I für ein vorgegebenes Luftverhältnis λ aufgetragen.

Für den Luftvolumenstrom $V_L$ und den elektrischen Strom I des PEM-Brennstoffzellenblocks 4 gilt nach dem Gesetz von Faraday folgender funktionaler Zusammenhang:

$$V_L = \lambda * \frac{0,2091 * I * n_B}{0,21} * \frac{T_L}{273,15},$$

wobei

$V_L$ der Luftvolumenstrom durch den PEM-Brennstoffzellenblock 4 in kg/h,

$\lambda$ das Luftverhältnis,

$0,2091 * I * n_B$ der Volumenstrom an Sauerstoff ($O_2$) in kg/h durch den Brennstoffzellenblock 4 berechnet nach dem Faradayschen Gesetz,

I der in dem PEM-Brennstoffzellenblock 4 erzeugte elektrische Strom in A und

$n_B$ die Anzahl der PEM-Brennstoffzellen in dem PEM-Brennstoffzellenblock 4,

0,21 der volumetrische Anteil von Sauerstoff ($O_2$) in der Luft und

$T_L$ die Temperatur der den PEM-Brennstoffzellenblock 4 durchströmenden Luft in K ist.

Jedem Wert I des in dem PEM-Brennstoffzellenblock 4 erzeugten elektrischen Stromes entspricht somit ein bestimmter Wert $V_L$ des Luftvolumenstromes durch den PEM-Brennstoffzellenblock 4, der zum Erzeugen des elektrischen Stromes I notwendig ist.

Wird für das Luftverhältnis $\lambda$ ein konstanter Erfahrungswert vorgegeben, vorzugsweise $\lambda$ gleich 2, so erhält man zwischen dem Luftvolumenstrom $V_L$ und dem elektrischen Strom I des PEM-Brennstoffzellenblocks 4 eine lineare Beziehung, da alle weiteren Größen im Gesetz von Faraday konstante Größen sind, die nicht gesondert gemessen werden müssen.

Da außerdem die Drehzahl n des drehzahlgesteuerten Verdichters 8 proportional zu dem von ihm erzeugten Luftvolumenstrom $V_L$ ist, ist somit auch ein linearer Zusammenhang zwischen der Drehzahl n des drehzahlgesteuerten Verdichters 8 und dem elektrischen Strom I des PEM-Brennstoffzellenblockes 4 gegeben.

Somit läßt sich für einen vorgegebenen Wert $I_{SN}$ des elektrischen Stromes I mit Hilfe der Kennlinie für den funktionalen Zusammenhang zwischen dem elektrischen Strom I des PEM-Brennstoffzellenblocks 4 und der Drehzahl n des drehzahlgesteuerten Verdichters 8 auf einfache Weise der Sollwert $n_{SN}$ ableiten.

## Patentansprüche

1. Verfahren zum Betreiben einer PEM-Brennstoffzellenanlage (2), die wenigstens einen PEM-Brennstoffzellenblock (4) enthält, dem ein drehzahlgesteuerter Verdichter (8) zum Zuführen des Luftvolumenstromes $V_L$ vorgeschaltet ist, wobei zum Einstellen des elektrischen Stromes I des PEM-Brennstoffzellenblocks (4) auf einen vorgegebenen Wert $I_{SN}$ die Drehzahl n des Verdichters (8) auf einen Sollwert $n_{SN}$ gesteuert wird, wobei der Sollwert $n_{SN}$ aus dem vorgegebenen Wert $I_{SN}$ des elektrischen Stromes I gemäß einer Kennlinie ($n = f(I_{SN})$) abgeleitet wird,
**dadurch gekennzeichnet, daß** gleichzeitig mit einer Änderung des vorgegebenen Wertes $I_{SN}$ der Sollwert $n_{SN}$ der Drehzahl auf den der Kennlinie gemäßen Wert eingestellt wird.

2. Verfahren nach Anspruch 1, bei dem der Sollwert $n_{SN}$ der Drehzahl n für den drehzahlgesteuerten Verdichter (8) von einer Steuereinheit (18,22) vorgegeben wird.

3. Verfahren nach Anspruch 1 oder 2, bei dem ein dem PEM-Brennstoffzellenblock (4) nachgeschaltetes Ventil (12) so eingestellt wird, daß sich bei maximaler Drehzahl $n_M$ des Verdichters (8) ein Luftvolumenstrom $V_L$ ergibt, der dem vorgegebenen Luftverhältnis $\lambda$ entspricht.

4. PEM-Brennstoffzellenanlage (2), die wenigstens einen PEM-Brennstoffzellenblock (4) enthält, dem ein drehzahlgesteuerter Verdichter (8) zum Zuführen des Luftvolumenstromes $V_L$ vorgeschaltet ist, wobei eine Steuereinheit (18,22) zum Einstellen des elektrischen Stromes I des PEM-Brennstoffzellenblocks (4) auf einen vorgegebenen Wert $I_{SN}$ vorgesehen ist, welche die Drehzahl n des Verdichters (8) auf einen Sollwert $n_{SN}$ steuert, wobei der Sollwert $n_{SN}$ aus dem vorgegebenen Wert $I_{SN}$ des elektrischen Stromes I abgeleitet wird.

5. PEM-Brennstoffzellenanlage (2) nach Anspruch 4, bei der ein Ventil (12) dem PEM-Brennstoffzellenblock (4) nachgeschaltet ist.

6. PEM-Brennstoffzellenaniage (2) nach Anspruch 4 oder 5, bei der ein Gaspedal (22) zum Einstellen des elektrischen Stromes I des PEM-Brennstoffzellenblocks (4) vorgesehen ist.

## Claims

1. Method for operating a PEM fuel cell installation (2) which contains at least one PEM fuel cell block (4), upstream of which a speed-controlled compressor (8) for supplying the air flow $V_L$ is arranged, the speed n of the compressor (8) being controlled at a setpoint value $n_{SN}$ in order to set the electric current I of the PEM fuel cell block (4) to a specified value $I_{SN}$, the setpoint value $n_{SN}$ being derived from the specified value $I_{SN}$ of the electric current I according to a characteristic curve ($n = f(I_{SN})$),

**characterised in that**, simultaneously with a change in the specified value $I_{SN}$, the setpoint value $n_{SN}$ of the speed is set to the value according to the characteristic curve.

2. Method according to Claim 1, in which the setpoint value $n_{SN}$ of the speed n for the speed-controlled compressor (8) is specified by a control unit (18, 22).

3. Method according to Claim 1 or 2, in which a valve (12) arranged downstream of the PEM fuel cell block (4) is set in such a way that, for a maximum speed $n_M$ of the compressor (8), an air flow rate $V_L$ which corresponds to the specified excess air factor $\lambda$ is obtained.

4. PEM fuel cell installation (2), which contains at least one PEM fuel cell block (4), upstream of which a speed-controlled compressor (8) for supplying the air flow $V_L$ is arranged, a control unit (18, 22) for setting the electric current I of the PEM fuel cell block (4) to a specified value $I_{SN}$ being provided, which controls the speed n of the compressor (8) at a setpoint value $n_{SN}$, the setpoint value $n_{SN}$ being derived from the specified value $I_{SN}$ of the electric current I.

5. PEM fuel cell installation (2) according to Claim 4, in which a valve (12) is arranged downstream of the PEM fuel cell block (4).

6. PEM fuel cell installation (2) according to Claim 4 or 5, in which an accelerator pedal (22) is provided for setting the electric current I of the PEM fuel cell block (4).


**Revendications**

1. Procédé pour faire fonctionner une unité (2) à piles à combustible PEM, qui comporte au moins un bloc (4) de piles à combustible PEM en amont duquel est monté un compresseur (8) commandé par le nombre de tours et destiné à apporter le courant $V_L$ d'air en volume, le nombre de tours n du compresseur (8) étant, pour régler le courant I électrique du bloc (4) de piles à combustible PEM, mis à une valeur $n_{SN}$ de consigne, la valeur $n_{SN}$ de consigne étant déduite de la valeur $I_{NS}$ prescrite du courant I électrique suivant une courbe caractéristique ( n = f($I_{SN}$)),

     **caractérisé en ce que** l'on règle simultanément à une modification de la valeur $i_{SN}$ prescrite la valeur $n_{SN}$ de consigne du nombre de tours à la valeur suivant la courbe caractéristique.

2. Procédé suivant la revendication 1, dans lequel on prescrit la valeur $n_{SN}$ de consigne du nombre de tours n du compresseur (8) commandé par le nombre de tours par une unité (18, 22) de commande.

3. Procédé suivant la revendication 1 ou 2, dans lequel on règle une vanne (12) montée en aval du bloc (4) de piles à combustible PEM de façon à obtenir, pour un nombre de tours $n_M$ maximum du compresseur (8), un courant $V_L$ d'air en volume qui correspond au rapport $\lambda$ d'air prescrit.

4. Unité (2) à piles à combustible PEM en amont de laquelle est monté un compresseur (8) commandé par le nombre de tours et destiné à apporter le courant $V_L$ d'air en volume, dans laquelle il est prévu une unité (18, 22) de commande destinée à régler le courant I électrique du bloc (4) de piles à combustible PEM à une valeur $I_{SN}$ prescrite qui commande le nombre de tours du compresseur (8) à une valeur $n_{SN}$ de consigne, la valeur $n_{SN}$ de consigne étant déduite de la valeur $I_{SN}$ prescrite du courant I électrique.

5. Unité (2) à piles à combustible PEM suivant la revendication 4, dans laquelle une vanne (12) est montée en aval du bloc (4) de piles à combustible PEM.

6. Unité (2) à piles à combustible PEM suivant la revendication 4 ou 5, dans laquelle il est prévu une pédale (22) des gaz pour régler le courant I électrique du bloc (4) de piles à combustible PEM.

FIG 1

FIG 2